# EUROPEAN PATENT SPECIFICATION

(11) **EP 3 230 324 B1**
(45) Date of publication and mention of the grant of the patent: **12.09.2018**
(21) Application number: 15812976.7
(22) Date of filing: 01.12.2015
(51) Int. Cl.: C08F 2/34, C08F 4/649, C08F 110/02

(54) **PROCESS FOR THE POLYMERIZATION OF ETHYLENE**
VERFAHREN ZUR POLYMERISIERUNG VON ETHYLEN
PROCÉDÉ POUR LA POLYMÉRISATION D'ÉTHYLÈNE

(30) Priority: 09.12.2014 EP 14196869
(43) Date of publication of application: 18.10.2017
(73) Proprietor: Basell Poliolefine Italia S.r.l., 20121 Milano (IT)
(72) Inventor: BAITA, Pietro, 44122 Ferrara (IT); DALL'OCCO, Tiziano, 44122 Ferrara (IT); DI DIEGO,Maria, 44122 Ferrara (IT); LIGUORI, Dario, 44122 Ferrara (IT); MARTURANO, Lorella, 44122 Ferrara (IT); MAUS, Andreas, 60431 Frankfurt am Main (DE); MEI, Gabriele, 44122 Ferrara (IT); MEIER, Gerhardus, 60320 Frankfurt (DE); MORINI, Giampiero, 44122 Ferrara (IT); PICA, Roberta, 44122 Ferrara (IT); SCHUELLER, Ulf, 64331 Weiterstadt (DE)
(74) Representative: Giberti, Stefano
(86) International application number: PCT/EP2015/078127
(87) International publication number: WO 2016/091644

(56) References cited:
- US-A- 5 093 443
- US-B2- 6 660 817

## Description

### FIELD OF THE INVENTION

The present disclosure relates to a gas-phase process for the polymerization of ethylene and its mixtures with olefins CH₂=CHR, wherein R is an alkyl, cycloalkyl or aryl radical having 1-12 carbon atoms, carried out in the presence of a catalyst comprising (a) a solid catalyst component comprising Ti, Mg, halogen and optionally an electron donor, (b) an aluminum alkyl compound and (c) specific halogenated alcohols. The process is characterized by a reduced extent of ethane formation.

### BACKGROUND OF THE INVENTION

Gas-phase polymerization is one of the most spread out techniques for the preparation of polyethylene which can be carried out in a fluidized or stirred bed reactor in the presence of a suitable catalyst, ethylene, fluidization gas and molecular weight regulator typically consisting of hydrogen.

In the evaluation of a catalyst performance for gas-phase ethylene polymerization activity is a very important factor. For a given catalyst system, it may depend on the polymerization conditions, such as temperature and pressure. However, once fixed the polymerization conditions the activity depends strictly on the catalyst system and when the activity is not satisfactory the amount of catalyst fed to the reactor must be increased or its residence time made longer. In any case, it is clear that the above solutions penalize the plant operability from the economic point of view as the increase of catalyst fed means increase of the cost per unity of polymer produced, while the increase of the residence time means a lower productivity of the plant.

Titanium based Ziegler-Natta catalysts are generally used for the gas-phase polymerization of ethylene in combination with aluminum alkyls. When hydrogen is used as molecular weight regulator a fraction of ethylene is reduced to ethane thereby lowering the amount of ethylene available for polymerization. Moreover, as during the continuous polymerization ethane accumulates in the ethylene, it would be needed its removal via distillation or by purging before it reaches a too high level. Such a drawback is especially felt when ethylene polymers having relatively low molecular weight is to be produced. In this situation in fact, the high hydrogen content of the gas phase mixture generates high hydrogen/ethylene pressure ratio which makes the ethane generation more favorite from the stoichiometric point of view.

It would therefore be important to find a practical and efficient way to reduce the ethane generation and, possibly, simultaneously increase the polymerization activity. This task is not easy to be achieved because the behavior of chemical aids for this aspect is totally unpredictable. Certain chemicals in fact may boost catalyst activity but are substantially not effective in the suppression of ethane generation.

Halogenated hydrocarbons have been disclosed in the past as activity improvers and ethane generation reducers. EP 529977 discloses the use of halogenated hydrocarbons such as mono or polyhalogenated alkanes, as ethane generation reducers in gas-phase polymerization process. In examples 3 and 4 chloroform and 1,1,1-trichloroethane are used in polymerization with a H₂/C₂⁻ pressure ratio of 1.25 giving respectively 3.5 g ethane/kg PE and 5.3 g ethane/kg PE. In both cases the improvement on activity with respect to no use of halogenated hydrocarbon is very low.

### SUMMARY OF THE INVENTION

The applicant has now found that a certain group of halogenated alcohols used in gas phase polymerization of ethylene in combination with a Ti based catalyst component and aluminum alkyls as co-catalyst allows to efficiently suppress ethane formation and to simultaneously increase the polymerization activity.

It is therefore an object of the present disclosure a process for the preparation of an ethylene (co)polymer comprising polymerizing a gas mixture comprising ethylene, hydrogen an inert fluidizing gas and optionally one or more alpha olefins CH₂=CHR where R is a C₁-C₁₀ hydrocarbon group in the presence of a catalyst system comprising (A) a solid catalyst component comprising a titanium compound supported on magnesium dichloride (B) an aluminum alkyl compound and (C) an halogenated alcohol of formula AOH where A is a C₁-C₁₀ saturated or unsaturated hydrocarbon group in which at least one of the hydrogen atoms is replaced by chlorine, said process being characterized by generating an amount of ethane lower than the amount generated under the same polymerization conditions in the absence of the halogenated alcohol (C).

A further object of the present disclosure is a method for reducing the ethane generation in a polymerization process which comprises the polymerization of a gaseous mixture comprising ethylene, hydrogen an inert fluidizing gas and optionally one or more alpha olefins CH₂=CHR where R is a C₁-C₁₀ hydrocarbon group in the presence of a catalyst system which comprises (A) a solid catalyst component comprising a titanium compound supported on magnesium dichloride and (B) an aluminum alkyl compound, said method being characterized by the fact that the polymerization of the gaseous mixture is carried out in the further presence of a halogenated alcohol of formula AOH where A is a C₁-C₁₀ saturated or unsaturated hydrocarbon group in which at least one of the hydrogen atoms is replaced by chlorine.

### DETAILED DESCRIPTION OF THE INVENTION

Preferably, the A group has up to 8 carbon atoms and more preferably up to 5 carbon atoms. In a preferred embodiment, the A group is a saturated linear hydrocarbon group having up to four carbon atoms. In a particularly preferred embodiment the chlorine atom replaces one or more hydrogen linked on the carbon atom in alpha position with respect to the hydroxyl group. In a particularly preferred embodiment at least two atoms and more preferably at least three atoms of hydrogen are replaced by chlorine. A preferred example of halogenated alcohol is 2,2,2,-trichloroethanol.

The halogenated alcohol compound (C) is preferably used in amounts such as to give a molar ratio (C)/Ti (where Ti is the titanium molar amount within component (A)), ranging from 0.1 to 10, more preferably from 0.5 to 8 and especially from 0.5 to 6.

The preferred titanium compounds have the formula Ti(OR^{II})ₙX_{y-n}, wherein n is a number comprised between 0 and 0.5 inclusive, y is the valence of titanium, R^{II} is an alkyl, cycloalkyl or aryl radical having 1-8 carbon atoms and X is halogen. In particular R^{II} can be ethyl, isopropyl, n-butyl, isobutyl, 2-ethylhexyl, n-octyl and phenyl, (benzyl); X is preferably chlorine.

If y is 4, n varies preferably from 0 to 0.02; if y is 3, n varies preferably from 0 to 0.015. TiCl₄ is especially preferred.

The solid catalyst component (A) may comprise an internal electron donor compound (internal donor), selected for example among ethers, esters, amines and ketones. The internal electron donor compound (ID) may be used in amount such as to give ID/Ti ratios from 0.1 to 8, preferably from 0.5 to 7 and more preferably from 1 to 6.

Preferred internal electron donor compounds are selected from esters of aliphatic or aromatic carboxylic acids such as phthalates, acetates, in particular ethylacetate, benzoates, alkoxybenzenes described in WO2011/015553, cyclic alkyl ethers such as tetrahydrofurane and diethers. Among them, ethyl acetate and tetrahydrofurane being the most preferred.

In addition to the above mentioned characteristics, the solid catalyst component (A) may show a porosity P_{F} (deriving from pores with radius up to 1 µ) determined with the mercury method ranging from 0.2 to 0.80 cm³/g and more preferably from 0.3 to 0.70 cm³/g usually in the range 0.35-0.60 cm³/g.

The surface area measured by the BET method is preferably lower than 80 and in particular comprised between 10 and 70 m²/g. The porosity measured by the BET method is generally comprised between 0.10 and 0.50, preferably from 0.10 to 0.40 cm³/g.

The particles of solid component have substantially spherical morphology and average diameter comprised between 30 and 150 µm, preferably from 40 to 100 µm. As particles having substantially spherical morphology, those are meant wherein the ratio between the greater axis and the smaller axis is equal to or lower than 1.5 and preferably lower than 1.3.

A method suitable for the preparation of spherical components mentioned above comprises a step (a) in which a compound MgCl₂.mR^{III}OH, wherein 0.3 ≤ m ≤ 1.7 and R^{III} is an alkyl, cycloalkyl or aryl radical having 1-12 carbon atoms is reacted with the said titanium compound of the formula Ti(OR^{I})ₙX₄₋ₙ, in which n, y, X and R^{I} have the same meaning as already defined.

In this case MgCl₂.mR^{III}OH represents a precursor of Mg dihalide. These kind of compounds can generally be obtained by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Representative methods for the preparation of these spherical adducts are reported for example in USP 4,469,648, USP 4,399,054, and WO98/44009. Another useable method for the spherulization is the spray cooling described for example in USP 5,100,849 and 4,829,034. Adducts having the desired final alcohol content can be obtained by directly using the selected amount of alcohol directly during the adduct preparation. However, if adducts with increased porosity are to be obtained it is convenient to first prepare adducts with more than 1.7 moles of alcohol per mole of MgCl₂ and then subjecting them to a thermal and/or chemical dealcoholation process. The thermal dealcoholation process is carried out in nitrogen flow at temperatures comprised between 50 and 150°C until the alcohol content is reduced to the value ranging from 0.3 to 1.7. A process of this type is described in EP 395083.

Generally these dealcoholated adducts are also characterized by a porosity (measured by mercury method) due to pores with radius up to 1µm ranging from 0.15 to 2.5 cm³/g preferably from 0.25 to 1.5 cm³/g.

In the reaction of step (a) the molar ratio Ti/Mg is stoichiometric or higher; preferably this ratio is higher than 3. Still more preferably a large excess of titanium compound is used. Preferred titanium compounds are titanium tetrahalides, in particular TiCl₄. The reaction with the Ti compound can be carried out by suspending the adduct in cold TiCl₄ (generally 0°C); the mixture is heated up to 80-140°C and kept at this temperature for 0.5-8 preferably from 0.5 to 3 hours. The excess of titanium compound can be separated at high temperatures by filtration or sedimentation and siphoning. The step (a) can be repeated twice or more. In cases of catalysts containing an electron donor compound, this latter can be added together with the titanium compound in the reaction system for reaction with the MgCl₂.mR^{III}OH adduct.

However, it constitutes a preferred embodiment of the invention adding the internal electron donor compound separately in a further step after the completion of the reaction between the adduct and the titanium compound as described in WO2004/106388.

According to another variant of the process, before adding the internal electron donor, the solid catalyst component coming from the end of step (a) is subject to prepolymerization in the presence of aluminum alkyls, small amount of monomer and optionally an external donor as described in PCT/EP2014/061958.

The catalyst component (B) of the invention is selected from Al-alkyl compounds possibly halogenated. In particular, it is selected from Al-trialkyl compounds, for example Al-trimethyl, Al-triethyl , Al-tri-n-butyl , Al-triisobutyl are preferred. The Al/Ti ratio is higher than 1 and is generally comprised between 5 and 800.

The molar ratio between component (B) and component (C) preferably ranges from 10 to 100, more preferably from 12 to 60 and especially from 15 to 50.

The above-mentioned components (A)-(B) and the halogenated alcohol (C) can be fed to the polymerization reactor in several ways. For example they can be fed separately into the polymerization reactor where, under the polymerization conditions can exploit their activity. In another embodiment, it may be advantageous to carry out a pre-contact of the components (A)-(C), optionally in the presence of small amounts of olefins, for a period of time ranging from 0.1 to 120 minutes preferably in the range from 1 to 60 minutes. The pre-contact can be carried out in a liquid diluent at a temperature ranging from 0 to 90°C preferably in the range of 20 to 70°C.

In a still possible embodiment the components (A)-(B) are pre-contacted under the specified conditions and then fed to the reactor where the halogenated alcohol is separately fed.

The catalyst system (A)-(B), with the optional presence of halogenated alcohol (C), can be used directly in the main gas-phase polymerization process or alternatively, it can be pre-polymerized beforehand. A pre-polymerization step is usually preferred when a pre-polymerization has not yet occurred in the preparation of the solid catalyst component A. The pre-polymerization can be carried out with any of the olefins CH₂=CHR, where R is H or a C₁-C₁₀ hydrocarbon group. In particular, it is especially preferred to pre-polymerize ethylene, propylene or mixtures thereof with one or more α-olefins, said mixtures containing up to 20% in moles of α-olefin, forming amounts of polymer from about 0.1 g per gram of solid component up to about 1000 g per gram of solid catalyst component. The pre-polymerization step can be carried out at temperatures from 0 to 80°C, preferably from 5 to 70°C, in the liquid or gas phase. The pre-polymerization step can be performed in-line as a part of a continuous polymerization process or separately in a batch process. The batch pre-polymerization of the catalyst of the invention with propylene in order to produce an amount of polymer ranging from 0.5 to 20 g per gram of catalyst component is particularly preferred. The pre-polymerized catalyst component can also be subject to a further treatment with a titanium compound before being used in the main polymerization step. In this case the use of TiCl₄ is particularly preferred. The reaction with the Ti compound can be carried out by suspending the prepolymerized catalyst component in the liquid Ti compound optionally in mixture with a liquid diluent; the mixture is heated to 60-120°C and kept at this temperature for 0.5-2 hours.

The gas-phase polymerization process of the present disclosure is preferably carried out at a temperature ranging from 60 to 130°C, preferably from 70 to 110°C, in any type of gas-phase reactor. Generally, the total pressure of the gas-phase ranges from 10 to 40 bar preferably from 15 to 35 bar. The fluidizing inert gas can be chosen among any inert gas known for this purpose. Nitrogen and propane are particularly preferred.

A particularly preferred gas-phase process for the polymerization of olefins, comprises the following steps in any mutual order:
a) polymerizing ethylene, optionally together with one or more comonomers, in a gas-phase reactor in the presence of hydrogen and of a catalyst system comprising (A) a solid catalyst component comprising a titanium compound supported on magnesium dichloride and (B) an aluminum alkyl compound;
b) polymerizing ethylene optionally with one or more comonomers in another gas-phase reactor in the presence of an amount of hydrogen less than step a) and of the catalysts system as defined in step (a) ;
where in at least one of said gas-phase reactors the growing polymer particles flow upward through a first polymerization zone (riser) under fast fluidization or transport conditions, leave said riser and enter a second polymerization zone (downcomer) through which they flow downward under the action of gravity, leave said downcomer and are reintroduced into the riser, thus establishing a circulation of polymer between said two polymerization zones and where in at least one of said reactors the polymerization is carried out in the further presence of (C) an halogenated alcohol of formula AOH where A is a C₁-C₁₀ saturated or unsaturated hydrocarbon group in which at least one of the hydrogen atoms is replaced by chlorine. In the first polymerization zone (riser), fast fluidization conditions are established by feeding a gas mixture comprising one or more olefins (ethylene and comonomers) at a velocity higher than the transport velocity of the polymer particles. The velocity of said gas mixture is preferably comprised between 0.5 and 15 m/s, more preferably between 0.8 and 5 m/s. The terms "transport velocity" and "fast fluidization conditions" are well known in the art; for a definition thereof, see, for example, "D. Geldart, Gas Fluidisation Technology, page 155 et seq. , J. Wiley & Sons Ltd. , 1986".

In the second polymerization zone (downcomer), the polymer particles flow under the action of gravity in a densified form, so that high values of density of the solid are reached (mass of polymer per volume of reactor), which approach the bulk density of the polymer. In other words, the polymer flows vertically down through the downcomer in a plug flow (packed flow mode), so that only small quantities of gas are entrained between the polymer particles.

Preferably, in the above described process, in step (b) a copolymerization of ethylene with one or more comonomers is carried out. In a further preferred embodiment, the compound (C) is present in both step a) and b).

When polymerizing ethylene, and optionally comonomers, in gas-phase the amount of hydrogen used, and therefore the pressure ratio H₂/C₂⁻ depends on the type of polyethylene products to be produced and in particular from their desired molecular weight expressed in terms Melt Flow Rate determined according to ASTM-D 1238 condition E. For relatively lower molecular weight (high values of MFR) a higher amount of hydrogen is needed and therefore also the pressure ratio H₂/C₂⁻ will be higher. Generally however, it ranges from 0.5 to 5, preferably from 1 to 4 and more preferably from 1.5 to 3.5.

The amount of ethane derived from ethylene hydrogenation tends to be directly dependent on the amount of hydrogen present. Therefore, the reduction of ethane generation obtained with the process and method of the present disclosure is particularly advantageous when producing polyethylene products having relatively high melt flow rate. Specifically, it has been observed that the use of the halogenated alcohols (C) allows to greatly reduce the amount of ethane generated even in the presence of high values of the H₂/C₂⁻ pressure ratio. In particular it has been observed that with the use of the described halogenated alcohol as component (C) in correspondence of H₂/C₂⁻ pressure ratio in the range 2.4-3 the amount of ethane generated is always less than 3 kg per ton of PE produced. This amount is lower than the amount produced in the prior art at lower H₂/C₂⁻ pressure ratio but using halogenated hydrocarbon in the gas phase polymerization process.

In addition to the ethylene homo and copolymers mentioned above the catalysts of the present invention are also suitable for preparing very-low-density and ultra-low-density polyethylenes (VLDPE and ULDPE, having a density lower than 0.920g/cm³, to 0.880 g/cm³) consisting of copolymers of ethylene with one or more alpha-olefins having from 3 to 12 carbon atoms, having a mole content of units derived from ethylene of higher than 80%; elastomeric copolymers of ethylene and propylene and elastomeric terpolymers of ethylene and propylene with smaller proportions of a diene having a content by weight of units derived from ethylene of between about 30 and 70%.

The following examples are given in order to further describe the present invention in a non-limiting manner.

### EXAMPLES

### CHARACTERIZATIONS

The properties are determined according to the following methods:

| | |
|---|---|
| MIE flow index: | ASTM-D 1238 condition E |
| MIF flow index: | ASTM-D 1238 condition F |
| MIP flow index: | ASTM D 1238 condition P |
| Bulk density: | DIN-53194 |

Porosity and surface area with nitrogen: are determined according to the B.E.T. method (apparatus used SORPTOMATIC 1900 by Carlo Erba).

### Porosity and surface area with mercury:

The measure is carried out using a "Pascal 240" series porosimeter by Carlo Erba. The porosity is determined by intrusion of mercury under pressure. For this determination use is made of a calibrated dilatometer (capillary diameter 3 mm) CD3P (by Carlo Erba) connected to a reservoir of mercury and to a high-vacuum pump. A weighed amount of sample is placed in the dilatometer. The apparatus is then placed under high vacuum (<0.1 mm Hg) and is maintained in these conditions for 20 minutes. The dilatometer is then connected to the mercury reservoir and the mercury is allowed to flow slowly into it until it reaches the level marked on the dilatometer at a height of 10 cm. The valve that connects the dilatometer to the vacuum pump is closed and then the mercury pressure is gradually increased with nitrogen up to 140 kg/cm². Under the effect of the pressure, the mercury enters the pores and the level goes down according to the porosity of the material.

The porosity (cm³/g) (for supports and catalysts only deriving from pores up to 1µm) and the pore distribution curve, are directly calculated from the integral pore distribution curve, which is function of the volume reduction of the mercury and applied pressure values (all these data are provided and elaborated by the porosimeter associated computer which is equipped with a dedicated Pascal software supplied by C. Erba.

### EXAMPLES 1-3 and COMPARATIVE 1-2

### Procedure for the preparation of the solid catalyst component (A)

A magnesium chloride and alcohol adduct containing about 3 mols of alcohol was prepared following the method described in example 2 of USP 4,399,054, but working at 2000 RPM instead of 10000 RPM. The adduct were subject to a thermal treatment, under nitrogen stream, over a temperature range of 50-150 °C until a weight content of 25% of alcohol was reached.

Into a 2 L four-necked round flask, purged with nitrogen, 1 L of TiCl₄ was introduced at 0°C. Then, at the same temperature, 70 g of a spherical MgCl₂/EtOH adduct containing 25 %wt of ethanol and prepared as described above were added under stirring. The temperature was raised to 140 °C in 2 h and maintained for 120 minutes. Then, the stirring was discontinued, the solid product was allowed to settle and the supernatant liquid was siphoned off. The solid residue was then washed once with heptane at 80°C and five times with hexane at 25°C and dried under vacuum at 30 °C.

Into a 260cm³ glass reactor provided with stirrer, 351.5 cm³ of hexane at 20°C and whilst stirring 7 g of the catalyst component prepared as described above were introduced at 20°C. Keeping constant the internal temperature, 5.6 cm³ of tri-n-octylaluminum (TNOA) in hexane (about 370 g/l) were slowly introduced into the reactor and the temperature was brought to 10°C. After 10 minutes stirring, 10 g of propylene were carefully introduced into the reactor at the same temperature during a time of 4 hours. The consumption of propylene in the reactor was monitored and the polymerization was discontinued when a theoretical conversion of 1g of polymer per g of catalyst was deemed to be reached. Then, the whole content was filtered and washed three times with hexane at a temperature of 30°C (50 g/l). After drying the resulting pre-polymerized catalyst (A) was analyzed and found to contain 1.05 g of polypropylene per g of initial catalyst, 2.7%Ti, 8.94%Mg and 0.1%Al.

### Polymerization procedure

The polymerization process was carried out in a plant working continuously and basically equipped with a small reactor (pre-contacting pot) in which the catalyst components are mixed to form the catalytic system, a second transit vessel receiving the catalytic system formed in the previous reactor and one fluidized bed reactor (*polymerization reactors*) kept under fluidization conditions with propane receiving the catalyst mixture coming from the previous reactor.

The following reactants are fed to the pre-contacting pot:
- the solid catalyst component prepared as described above
- liquid propane as diluent
- a solution of TIBAL

The so obtained catalytic system was fed from the pre-contacting section (first vessel) to the second vessel and then to the gas-phase fluidized bed reactor together monomer feed, antistatic agent (glycerol monostearate/Atmer) and a solution in hexane of 2,2,2,-trichloroethanol (cyclohexyl chloride in Comparative examples 1 and 2). The reactor was operated under the conditions reported in Table 1. The polymer discharged from the final reactor was first transferred to the steaming section and then dried at 70°C under a nitrogen flow and weighted. The polymer properties are reported in Table 1.

**Table 1**

| EXAMPLE | | | 1 | 2 | C1 | C2 | 3 |
|---|---|---|---|---|---|---|---|
| **PCP** | T | °C | 40 | 40 | 40 | 30 | 30 |
| | Alkyl Type | - | Tibal | Tibal | Tibal | Tibal | Tibal |
| | Alk/cat | g/g | 2 | 2 | 2 | 2.0 | 2.0 |
| | | | | | | | |
| **FBR** | T | °C | 80 | 80 | 80 | 80 | 80 |
| | P | bar | 27 | 27 | 27 | 29 | 29 |
| | Antistatic (AA) type | | GMS | GMS | GMS | Atmer | Atmer |
| | AA /polymer | ppm wt | 135 | 121 | 154 | 110 | 110 |
| | COMP. (C) /Ti | mol/mol | 1.9 | 1.0 | 1.3 | 2.2 | 1.4 |
| | C₂⁻ | % | 10.4 | 11.4 | 12.1 | 5.1 | 4.7 |
| | H₂/C₂⁻ | - | 2.7 | 2.5 | 2.8 | 1.8 | 1.7 |
| | C₂⁺/PE | kg/ton PE | 1.9 | 2.4 | 3.3 | 0.8 | 0.6 |
| | Spec. Mileage | g/g | 491 | 355 | 363 | 1178 | 1154 |
| | MIE | g/10' | 140.0 | 150 | 140 | 10.7 | 9.4 |
| | PBD | g/cc | 0.490 | 0.482 | 0.485 | 0.438 | 0.442 |

### EXAMPLES 4-6 and Comparative 3-4

### Preparation of the solid component (A)

A magnesium chloride and alcohol adduct containing about 3 mols of alcohol was prepared following the method described in example 2 of USP 4,399,054, but working at 2000 RPM instead of 10000 RPM. The adduct were subject to a thermal treatment, under nitrogen stream, over a temperature range of 50-150 °C until a weight content of 24.4% of alcohol was reached.

Into a 2 L four-necked round flask, purged with nitrogen, 1 L of TiCl₄ was introduced at 0°C. Then, at the same temperature, 70 g of a spherical MgCl₂/EtOH adduct containing 24.4 %wt of ethanol and prepared as described above were added under stirring. The temperature was raised to 130 °C in 2 h and maintained for 90 min. Then, the stirring was discontinued, the solid product was allowed to settle and the supernatant liquid was siphoned off. A new amount of fresh TiCl₄ was added to the flask, such to reach the initial liquid volume. The temperature was maintained at 130°C for 90 minutes. Again, the solid was allowed to settle, and the liquid was siphoned off. The solid was then washed three times with anhydrous iso-hexane (400 mL at each washing) at 60 °C and twice at 40°C.

At the end the residual solid was suspended in 600 mL of dry iso-hexane. At the same temperature, under stirring, 92 ml of Ethylacetate were added dropwise.

The temperature was raised to 50 °C and the mixture was stirred for 2 hours. Then, the stirring was discontinued, the solid product was allowed to settle and the supernatant liquid was siphoned off.

The solid was washed twice with anhydrous hexane (2 x 100 mL) at 40 °C, recovered, dried under vacuum and analyzed.

Mg= 15.0 %wt, Ti=2.4 wt%, AcOEt= 26.9 %wt

### Polymerization Procedure

The polymerization process was carried out in the same apparatus described in Example 1 with the difference that in the second vessel prepolymerization of the catalyst prepared as described above occurred according to the conditions reported in Table 2 which also describes the main polymerization conditions.

**Table 2**

| EXAMPLE | | | C3 | 4 | 5 | C4 | 6 |
|---|---|---|---|---|---|---|---|
| **PCPs** | T | °C | 60 | 60 | 60 | 60 | 60 |
| | tau | min | 29 | 29 | 29 | 55 | 55 |
| | Alkyl Type | - | Teal | Teal | Teal | Teal | Teal |
| | Alk/cat | g/g | 6.0 | 6.0 | 6.0 | 6.0 | 6.0 |
| | Alk/THF | g/g | 44.0 | 44.0 | 44.0 | 44.0 | 44.0 |
| Prepoly | T | °C | 60 | 60 | 60 | 60 | 60 |
| | C₂⁻feed/CAT | g/g | 11 | 11 | 11 | 10 | 10 |
| | H₂/C₂⁻ | Mol. Ratio | 0.25 | 0.25 | 0.25 | 0.25 | 0.25 |
| | | | | | | | |
| | | | | | | | |
| **FBR** | T | °C | 80 | 80 | 80 | 80 | 80 |
| | P | bar | 24 | 24 | 24 | 29 | 29 |
| | Antistatic (AA) type | | atmer | atmer | atmer | atmer | atmer |
| | AA /prod | ppm wt | 101 | 114 | 112 | 40 | 40 |
| | COMP. (C) /Ti | mol/mol | - | 4.1 | 2.8 | - | 2.6 |
| | C₂⁻ | % | 14.2 | 13.7 | 13.6 | 9.7 | 10.0 |
| | H₂/C₂⁻ | - | 2.1 | 2.1 | 1.8 | 1.8 | 1.8 |
| | C₂⁺/PE | kg/ton PE | 5.9 | 2.8 | 2.5 | 1.5 | 1.0 |
| | Spec.Mil. | g/g.bar.h | 476 | 681 | 684 | 770 | 987 |
| | MIE | g/10' | 80.0 | 87.0 | 81.0 | 40.0 | 45.2 |
| | PBD | g/cc | 0.484 | 0.474 | 0.480 | 0.460 | 0.451 |

### EXAMPLE 7-8 and comparative example 5

The polymerization process was carried out in the same apparatus described in Example 1 with the difference that the catalyst prepared according to example 1 of PCT/EP2014/061958 was used in combination with tetrahydrofurane as external donor. Atmer 163 was used as an antistatic instead of GMS. Polymerization conditions and results are reported in table 3.

**Table 3**

| EXAMPLE | | | C5 | 7 | 8 |
|---|---|---|---|---|---|
| **PCPs** | T | °C | 50 | 50 | 50 |
| | Alkyl Type | - | TEAL | TEAL | TEAL |
| | Alk/cat | g/g | 3.0 | 3.0 | 3.0 |
| | Alk/THF | g/g | 44.0 | 44.0 | 44.0 |
| | | | | | |
| **FBR** | T | °C | 80 | 80 | 80 |
| | P | bar | 27 | 27 | 27 |
| | Antistatic (AA) type | | Atmer | Atmer | Atmer |
| | AA /prod | ppm wt | 102 | 95 | 97 |
| | Comp. (C)/Ti | mol/mol | - | 2.8 | 1.2 |
| | C₂⁻ | % | 15.5 | 14.4 | 12.7 |
| | H₂/C₂⁻ | - | 2.7 | 2.4 | 2.7 |
| | C₂⁺/PE | kg/ton PE | 3.9 | 2.2 | 2.5 |
| | Spec.Mil. | g/g·bar.h | 302 | 355 | 379 |
| | MIE | g/10' | 84.0 | 83.0 | 84.0 |
| | PBD | g/cc | 0.408 | 0.425 | 0.422 |

As evidenced by the above examples the halogenated alcohols provide reduced ethane (C₂⁺) generation per unity of PE produced together with an increase of polymerization activity. In particular, halogenated alcohols (example 1) proved to be more efficient in reducing ethane generation than the halogenated hydrocarbon under the same conditions (comparative example 1-2).

## Claims

1. A process for the preparation of an ethylene (co)polymer comprising polymerizing a gas mixture comprising ethylene, hydrogen an inert fluidizing gas and optionally one or more alpha olefins CH₂=CHR where R is a C₁-C₁₀ hydrocarbon group in the presence of a catalyst system comprising (A) a solid catalyst component comprising a titanium compound supported on magnesium dichloride (B) an aluminum alkyl compound and (C) an halogenated alcohol of formula AOH where A is a C₁-C₁₀ saturated or unsaturated hydrocarbon group in which at least one of the hydrogen atoms is replaced by chlorine, said process being **characterized by** generating an amount of ethane lower than the amount generated under the same polymerization conditions in the absence of the halogenated alcohol (C).

2. The process according to claim 1 in which the A group has up to 8 carbon atoms.

3. The process according to claim 1 in which the A group is a saturated linear hydrocarbon group having up to four carbon atoms.

4. The process according to claim 1 in which the chlorine atom replaces one or more hydrogen linked on the carbon atom in alpha position with respect to the hydroxyl group.

5. The process according to claim 1 in which at least two atoms of hydrogen are replaced by chlorine.

6. The process according to claim 1 in which R group is selected among C₁-C₅ linear alkyl groups.

7. The process according to anyone of claims 1-5 in which the compound (C) is 2,2,2,-trichloroethanol.

8. The process according to claim 1 in which halogenated alcohol (C) is used in amounts such as to give a molar ratio (C)/Ti ranging from 0.1 to 10, where Ti is the titanium molar amount within component (A).

9. The process according to claim 8 in which the (C)/Ti molar ratio ranges from 0.5 to 8.

10. The process according to claim 1 in which the solid catalyst component (A) further comprises an internal donor (ID) selected for example among ethers, esters, amines and ketones.

11. The process according to claim 10 in which the ID is used in amount such as to give ID/Ti ratios from 0.1 to 8.

12. The process according to claim 1 carried out at a temperature ranging from 60 to 130°C and at total pressure of the gas-phase from 10 to 40 bar.

13. A process according to claim 1 comprising the following steps in any mutual order:
a) polymerizing ethylene, optionally together with one or more comonomers, in a gas-phase reactor in the presence of hydrogen and of a catalyst system comprising (A) a solid catalyst component comprising a titanium compound supported on magnesium dichloride and (B) an aluminum alkyl compound;
b) copolymerizing ethylene with one or more comonomers in another gas-phase reactor in the presence of an amount of hydrogen less than step a) and of the catalysts system as defined in step (a);
where in at least one of said gas-phase reactors the growing polymer particles flow upward through a first polymerization zone (riser) under fast fluidization or transport conditions, leave said riser and enter a second polymerization zone (downcomer) through which they flow downward under the action of gravity, leave said downcomer and are reintroduced into the riser, thus establishing a circulation of polymer between said two polymerization zones, said process being **characterized by** the fact that in at least one of said reactors the polymerization is carried out in the further presence of (C) an halogenated alcohol of formula AOH where A is a C₁-C₁₀ saturated or unsaturated hydrocarbon group in which at least one of the hydrogen atoms is replaced by chlorine.

14. The gas-phase process according to claim 13 in which in step (b) a copolymerization of ethylene with one or more comonomers is carried out.

15. A method for reducing the ethane generation in a polymerization process which comprises the polymerization of a gaseous mixture comprising ethylene, hydrogen an inert fluidizing gas and optionally one or more alpha olefins CH₂=CHR where R is a C₁-C₁₀ hydrocarbon group in the presence of a catalyst system which comprises (A) a solid catalyst component comprising a titanium compound supported on magnesium dichloride and (B) an aluminum alkyl compound, said method being **characterized by** the fact that the polymerization of the gaseous mixture is carried out in the further presence of a halogenated alcohol of formula AOH where A is a C₁-C₁₀ saturated or unsaturated hydrocarbon group in which at least one of the hydrogen atoms is replaced by chlorine.

## Patentansprüche

1. Verfahren zur Herstellung eines Ethylen(co)polymers, umfassend Polymerisieren einer Gasmischung, die Ethylen, Wasserstoff, ein inertes Verwirbelungsgas und gegebenenfalls ein oder mehrere alpha-Olefine CH₂=CHR umfasst, wobei R eine C₁-C₁₀-Kohlenwasserstoffgruppe ist, in Gegenwart eines Katalysatorsystems, das (A) eine feste Katalysatorkomponente, die eine Titanverbindung geträgert auf Magnesiumdichlorid umfasst, (B) eine Aluminiumalkylverbindung und (C) einen halogenierten Alkohol mit der Formel AOH umfasst, wobei A eine gesättigte oder ungesättigte C₁-C₁₀-Kohlenwasserstoffgruppe ist, in der mindestens eines der Wasserstoffatome durch Chlor ersetzt worden ist, wobei das Verfahren **dadurch gekennzeichnet ist, dass** eine Menge an Ethan erzeugt wird, die niedriger als die Menge ist, die unter den gleichen Polymerisationsbedingungen in Abwesenheit des halogenierten Alkohols (C) erzeugt wird.

2. Verfahren nach Anspruch 1, wobei die Gruppe A bis zu 8 Kohlenstoffatome aufweist.

3. Verfahren nach Anspruch 1, wobei die Gruppe A eine gesättigte lineare Kohlenwasserstoffgruppe mit bis zu vier Kohlenstoffatomen ist.

4. Verfahren nach Anspruch 1, wobei das Chloratom ein oder mehrere Wasserstoffe ersetzt, die an das Kohlenstoffatom in alpha-Position in Bezug auf die Hydroxylgruppe gebunden sind.

5. Verfahren nach Anspruch 1, wobei mindestens zwei Wasserstoffatome durch Chlor ersetzt sind.

6. Verfahren nach Anspruch 1, wobei die Gruppe R ausgewählt ist aus linearen C₁-C₅-Alkylgruppen.

7. Verfahren nach einem der Ansprüche 1 bis 5, wobei die Verbindung (C) 2,2,2-Trichlorethanol ist.

8. Verfahren nach Anspruch 1, wobei der halogenierte Alkohol (C) in Mengen verwendet wird, um ein Molverhältnis (C)/Ti im Bereich von 0,1 bis 10 zu ergeben, wobei Ti die molare Menge an Titan in Komponente (A) ist.

9. Verfahren nach Anspruch 8, wobei das Molverhältnis von (C)/Ti im Bereich von 0,5 bis 8 liegt.

10. Verfahren nach Anspruch 1, wobei die feste Katalysatorkomponente (A) ferner einen internen Donor (ID) ausgewählt beispielsweise aus Ethern, Estern, Aminen und Ketonen umfasst.

11. Verfahren nach Anspruch 10, wobei der ID in einer solchen Menge verwendet wird, dass er ID/Ti-Verhältnisse von 0,1 bis 8 ergibt.

12. Verfahren nach Anspruch 1, das bei einer Temperatur im Bereich von 60 bis 130 °C und einem Gesamtdruck der Gasphase von 10 bis 40 bar durchgeführt wird.

13. Verfahren nach Anspruch 1, umfassend die folgenden Stufen in beliebiger Reihenfolge:
a) Polymerisieren von Ethylen, gegebenenfalls zusammen mit einem oder mehreren Comonomeren, in einem Gasphasenreaktor in Gegenwart von Wasserstoff und einem Katalysatorsystem, das (A) eine feste Katalysatorkomponente, die eine Titanverbindung geträgert auf Magnesiumdichlorid umfasst, und (B) eine Aluminiumalkylverbindung umfasst;
b) Copolymerisieren von Ethylen mit einem oder mehreren Comonomeren in einem anderen Gasphasenreaktor in Gegenwart einer Menge an Wasserstoff, die geringer als in Stufe a) ist, und in Gegenwart des Katalysatorsystems wie in Stufe (a) definiert;
wobei in mindestens einem der Gasphasenreaktoren die wachsenden Polymerpartikel durch eine erste Polymerisationszone (Steigrohr) unter raschen Verwirbelungs- oder Transportbedingungen aufwärts fließen, das Steigrohr verlassen und in eine zweite Polymerisationszone (Fallrohr) eintreten, wodurch sie unter der Wirkung der Schwerkraft fließen, das Fallrohr verlassen und erneut in das Steigrohr eingebracht werden, wodurch eine Polymerzirkulation zwischen den beiden Polymerisationszonen erzeugt wird, wobei das Verfahren durch die Tatsache gekennzeichnet ist, dass in mindestens einem der Reaktoren die Polymerisation in weiterer Gegenwart von (C) einem halogenierten Alkohol mit der Formel AOH durchgeführt wird, wobei A eine gesättigte oder ungesättigte C₁-C₁₀-Kohlenwasserstoffgruppe ist, wobei mindestens eines der Wasserstoffatome durch Chlor ersetzt ist.

14. Gasphasenverfahren nach Anspruch 13, wobei in Stufe (b) eine Copolymerisation von Ethylen mit einem oder mehreren Comonomeren durchgeführt wird.

15. Verfahren zum Reduzieren der Ethanerzeugung in einem Polymerisationsverfahren, welches die Polymerisation einer gasförmigen Mischung, die Ethylen, Wasserstoff, ein inertes Verwirbelungsgas und gegebenenfalls ein oder mehrere alpha-Olefine CH₂=CHR umfasst, wobei R eine C₁-C₁₀-Kohlenwasserstoffgruppe ist, in Gegenwart eines Katalysatorsystems umfasst, welches (A) eine feste Katalysatorkomponente, die eine Titanverbindung geträgert auf Magnesiumdichlorid umfasst, und (B) eine Aluminiumalkylverbindung umfasst, wobei das Verfahren durch die Tatsache gekennzeichnet ist, dass die Polymerisation der gasförmigen Mischung in weiterer Gegenwart eines halogenierten Alkohols mit der Formel AOH durchgeführt wird, wobei A eine gesättigte oder ungesättigte C₁-C₁₀-Kohlenwasserstoffgruppe ist, in der mindestens eines der Wasserstoffatome durch Chlor ersetzt ist.

## Revendications

1. Procédé de préparation d'un (co)polymère d'éthylène comprenant la polymérisation d'un mélange gazeux comprenant de l'éthylène, de l'hydrogène, un gaz de fluidisation inerte et éventuellement une ou plusieurs alpha oléfines CH₂=CHR, où R est un groupe hydrocarboné en C₁-C₁₀ en présence d'un système catalyseur comprenant (A) un composant catalyseur solide comprenant un composé de titane supporté sur du dichlorure de magnésium (B) un composé d'alkyle d'aluminium et (C) un alcool halogéné de formule AOH où A est un groupe hydrocarboné saturé ou insaturé en C₁-C₁₀ dans lequel au moins l'un des atomes d'hydrogène est remplacé par du chlore, ledit procédé étant **caractérisé par** la génération d'une quantité d'éthane inférieure à la quantité générée dans les mêmes conditions de polymérisation en l'absence de l'alcool halogéné (C).

2. Procédé selon la revendication 1 dans lequel le groupe A a jusqu'à 8 atomes de carbone.

3. Procédé selon la revendication 1 dans lequel le groupe A est un groupe hydrocarboné linéaire saturé ayant jusqu'à quatre atomes de carbone.

4. Procédé selon la revendication 1 dans lequel l'atome de chlore remplace un ou plusieurs hydrogènes liés sur l'atome de carbone en position alpha par rapport au groupe hydroxyle.

5. Procédé selon la revendication 1 dans lequel au moins deux atomes d'hydrogène sont remplacés par du chlore.

6. Procédé selon la revendication 1 dans lequel le groupe R est choisi parmi les groupes alkyle linéaires en C₁-C₅.

7. Procédé selon l'une quelconque des revendications 1 à 5 dans lequel le composé (C) est le 2,2,2,-trichloroéthanol.

8. Procédé selon la revendication 1 dans lequel l'alcool halogéné (C) est utilisé dans des quantités pour donner un rapport molaire (C)/Ti allant de 0,1 à 10, où Ti est la quantité molaire de titane dans le composant (A).

9. Procédé selon la revendication 8 dans lequel le rapport molaire (C)/Ti va de 0,5 à 8.

10. Procédé selon la revendication 1 dans lequel le composant catalyseur solide (A) comprend en outre un donneur interne (ID) choisi par exemple parmi les éthers, les esters, les amines et les cétones.

11. Procédé selon la revendication 10 dans lequel l'ID est utilisé dans une quantité pour donner des rapports ID/Ti allant de 0,1 à 8.

12. Procédé selon la revendication 1 effectué à une température allant de 60 à 130 °C et à une pression totale de la phase gazeuse allant de 10 à 40 bar.

13. Procédé selon la revendication 1 comprenant les étapes suivantes dans n'importe quel ordre mutuel :
a) la polymérisation de l'éthylène, éventuellement avec un ou plusieurs comonomères, dans un réacteur en phase gazeuse en présence d'hydrogène et d'un système catalyseur comprenant (A) un composant catalyseur solide comprenant un composé de titane supporté sur du dichlorure de magnésium et (B) un composé d'alkyle d'aluminium ;
b) la copolymérisation de l'éthylène avec un ou plusieurs comonomères dans un autre réacteur en phase gazeuse en présence d'une quantité d'hydrogène inférieure à l'étape a) et du système catalyseur tel que défini dans l'étape (a) ;
où, dans au moins l'un desdits réacteurs en phase gazeuse, les particules de polymère en croissance s'écoulent vers le haut à travers une première zone de polymérisation (colonne montante) dans des conditions de fluidisation ou de transport rapides, quittent ladite colonne montante et entrent dans une seconde zone de polymérisation (déversoir) à travers laquelle elles s'écoulent vers le bas sous l'action de la gravité, quittent ledit déversoir et sont réintroduites dans la colonne montante, établissant ainsi une circulation de polymère entre lesdites deux zones de polymérisation, ledit procédé étant **caractérisé par le fait que** dans au moins l'un desdits réacteurs, la polymérisation est effectuée en présence supplémentaire de (C) un alcool halogéné de formule AOH où A est un groupe hydrocarboné saturé ou insaturé en C₁-C₁₀ dans lequel au moins l'un des atomes d'hydrogène est remplacé par du chlore.

14. Procédé en phase gazeuse selon la revendication 13 dans lequel, à l'étape (b) une copolymérisation de l'éthylène avec un ou plusieurs comonomères est effectuée.

15. Procédé de réduction de la génération d'éthane dans un procédé de polymérisation qui comprend la polymérisation d'un mélange gazeux comprenant de l'éthylène, de l'hydrogène, un gaz de fluidisation inerte et éventuellement une ou plusieurs alpha oléfines CH₂=CHR, où R est un groupe hydrocarboné en C₁-C₁₀ en présence d'un système catalyseur qui comprend (A) un composant catalyseur solide comprenant un composé de titane supporté sur du dichlorure de magnésium et (B) un composé d'alkyle d'aluminium, ledit procédé étant **caractérisé par le fait que** la polymérisation du mélange gazeux est effectuée en présence supplémentaire d'un alcool halogéné de formule AOH où A est un groupe hydrocarboné saturé ou insaturé en C₁-C₁₀ dans lequel au moins l'un des atomes d'hydrogène est remplacé par du chlore.
